# EUROPEAN PATENT SPECIFICATION

(11) **EP 2 334 972 B1**
(45) Date of publication and mention of the grant of the patent: **27.08.2014**
(21) Application number: 08813359.0
(22) Date of filing: 09.10.2008
(51) Int. Cl.: F16M 11/14, F16B 2/02

(54) **A DEVICE AND A METHOD FOR ANCHORING A BEAM OR A BAR AGAINST AN ELEMENT FOR EXAMPLE CAMERA WITH A BAR AT A HOLDER**
VORRICHTUNG UND VERFAHREN ZUM VERANKERN EINES TRÄGERS ODER EINER STANGE GEGEN EIN ELEMENT, ZUM BEISPIEL EINER KAMERA MIT EINER STANGE AN EINEM HALTER
DISPOSITIF ET PROCEDE DE FIXATION D'UN BRAS OU D'UNE BARRE A UN ELEMENT, PAR EXEMPLE DE FIXATION D'UNE CAMERA AVEC UNE BARRE A UN SUPPORT

(43) Date of publication of application: 22.06.2011
(73) Proprietor: Spherofix AB, 740 11 Länna (SE)
(72) Inventor: OLERUD, Sven, 74011 Länna (SE)
(74) Representative: Brann AB
(86) International application number: PCT/SE2008/000548
(87) International publication number: WO 2010/041986

(56) References cited:
- EP-A1- 1 939 518
- FR-A1- 2 600 197
- SE-L- 0 700 992
- US-A- 1 429 940
- US-A- 2 962 251
- US-A- 5 267 712
- US-A- 5 860 728
- US-A- 5 860 728

## Description

### Technical field of the invention

The present invention relates to a device for with a single operation fastening and fixing a handle or round tube to an element so that they can take up any arbitrarily selected angle with each other in any arbitrarily selected plane of their respective rotational positions, e.g. a camera with a shaft in the form of a tube for fastening to a tripod, wherein the device comprises a screw joint in the form of a shaft-receiving, rotatable tubular retaining sleeve with a projecting tubular part which at its outer end is conical, slotted and provided with an external thread, preferably a helical thread, which is complementary with an internal helical thread in a spherical, slotted bushing which is situated in a spherical cavity situated in one end of the element, wherein the other end of the element is provided with means for fastening to a tripod attachment or the like, wherein the shaft is freely slidable as long as the sleeve and its conical part are not screwed down into the sphere's conical thread in the spherical cavity in the element.

### Technical background of the invention

There are many different solutions for fastening several elements to each other at different angles and in different planes.

For example US 5,860,728 describes a holder clamp assembly for holding a device in a preset angle with respect to a mounting bracket. The device is held by a compressible gripper. When the gripper is placed in the mounting bracket, a washer is laid on the gripper after which a ring component is screwed onto the mounting bracket, which ring at the same time pushes the washer onto the gripper, thereby compressing the gripper and clamping the device relative to the mounting bracket for rotation and translation.

### Short description of the inventive concept

The object of the present invention is to overcome the above-mentioned problems and disadvantages when connecting and fixing -shaped elements to each other.

In accordance with the concept of the invention the above-mentioned problem is solved by said device having a stand attachment with one end provided with a spherical cavity in which a deformable elastic bushing in the form of annular bushing is arranged. The annular bushing is divided into segments, flanges and has a spherical shape which is complementary to the spherical shape of the cavity and wherein the annular bushing has a conical threaded inner shape which is complementary to an external thread on a conical slotted part with a conical thread, situated at the lower end of a tubular locking- and retaining-sleeve which surrounds a rod or a handle which is mounted on e.g. a camera and during screwing of the conical slotted screw into the spherical annular bushing the camera with the rod is firmly gripped and thereby is locked in any desired angle, height and any desired plane.

Thus the invention comprises three main elements which when joined together form a stable combination which comprises, a stand attachment with a hole in one end for a bolt in a stand, and with a through spherical hole in the other end, which can be angled at 45° in order to maximise angular variations, and a complementary spherical annular bushing able to be positioned in this spherical hole and, able to be introduced into this, a conical threaded part, screw, of a holder sleeve able to receive the rod which at its other end is provided with a knurled ring. The spherical bushing, the mantel surface of which is divided into flanges held together by an annular part at the end of the annular bushing is placed in the spherical hole. The flanges are elastically bendable towards the centre of the bushing, which makes it easy to press it into the spherical cavity of the plate, where it thereafter stays in place by itself. The flanges of the bushing delimit an internal conical cavity and each flange is provided on the inside with a part of a conical thread. Together, these threaded parts form a conical internal thread. The screw, the retaining part's lower part, is conical with external conical threads which during the final stage of being tightening grip the internal conical thread of the bushing, the flanges. Before that the locking- and retaining-sleeve and connected rod may be positioned at any angle and rotational position in order to optimally drive the screw further until the threaded cone of the screw in the head grips the thread of the flanges of the bushing.

The pressure that is exerted against the screw makes it push the bushing down into the lower part of the hole where it is wedged tight and thereby removes the possibility that the spherical bushing rotates while the screw is being driven to a stop when the flanges of the bushing are pressed tight in the spherical hole.

A pin is arranged in the stand attachment in order to lock the position of the annular, slotted bushing and to prevent it from rotating.

### Brief description of enclosed figures

Figure 1 shows a view from the side of a device according to the present invention applied to a camera tripod.
Figure 2 shows the constituent parts of the device viewed in partly disassembled state, viewed from the side.
Figure 3 shows the invention applied on a stand attachment in perspective view, viewed obliquely from below.
Figure 4 shows, viewed in perspective view from the side, a spherical, deformable and slotted bushing, a stand attachment with a spherical cavity, a locking-and retaining-sleeve with a conical, slotted lower part and a knurled ring in the upper end, which constitute a device according to the present invention.

### Detailed description of a preferred embodiment of the invention

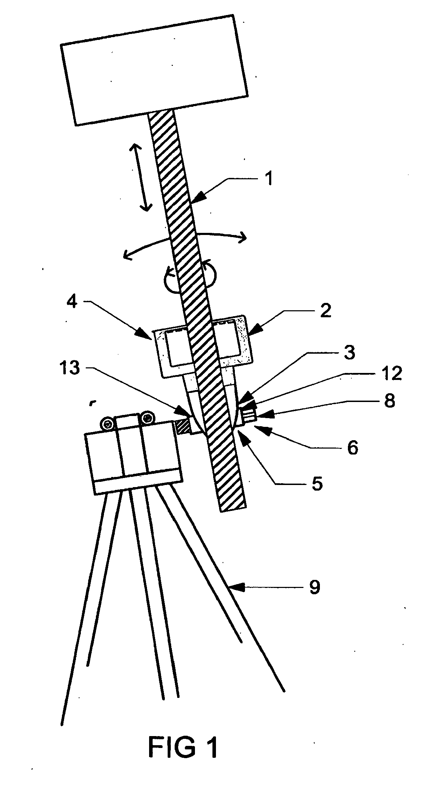

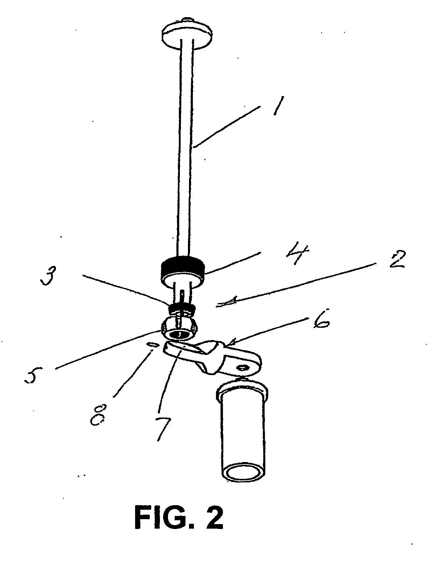

Figures 1 and 2 show a stand attachment 6, of a hard workable material, preferably metal, comprised in the device according to the present invention. The stand attachment may vary in thickness. In one end the stand attachment 6 has a spherical through hole 7.

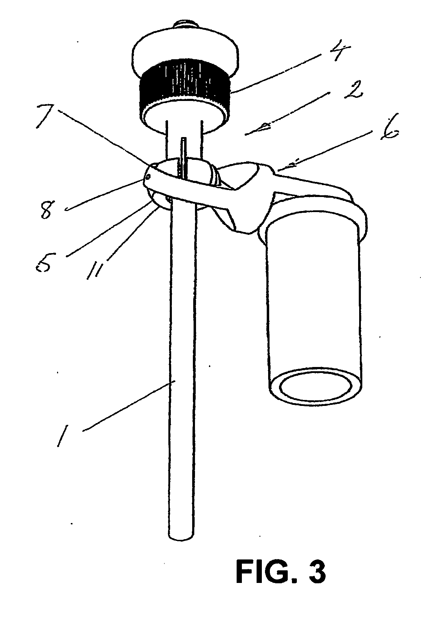

Figure 3 shows the annular bushing 5, stand attachment 6 and the conical threaded part 3, the screw, in the screwed-in position with the screw and the bushing viewed in perspective obliquely from below. The conical threaded part 3, the screw, is completely screwed into the annular bushing 5 and the flanges 12 of the annular bushing 5 fill up the spherical hole 7. The annular bushing 5 is locked against rotation by a pin 8 arranged on the inside of the spherical hole so that the annular bushing 5 does not rotate with the conical part 3, the screw, during tightening.

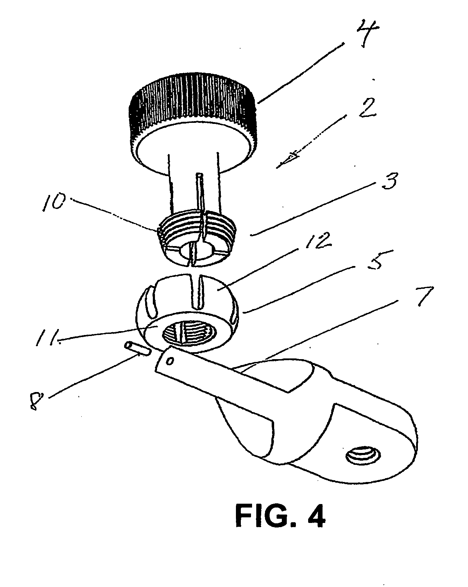

Figure 4 shows a spherical annular bushing 5, of a suitable material preferably also a metal, with a spherical shape with slits which delimit flanges and which leave a thin connection 11 left between the so-produced flanges. This connection, in the shape of a ring 11 allows, without being deformed, the flanges 12 to be elastically bent inwards so that the annular bushing 5 may be squeezed into the spherical hole 7 of the hold 6. The annular bushing 5 is kept in position in the spherical hole 7 when the flanges 12 regain their normal shape. The spherical shape of the bushing 3 facilitates unlimited tilted positions for it. The interior of the annular bushing 5 is mainly cone-shaped but becomes cylindrical in its lower part with dimensions adapted to the conical threaded part, screw, so that the annular bushing 5 is kept in place in the attachment 6 with the annular part 11 in the lower part of the hole 7. The inside of the conical part of the annular bushing 5 is provided with a thread 13 and the flanges 12 have sharp edges in order to increase the retaining effect.

During tightening of the knurled ring 4 of the locking- and retaining-sleeve the threads 10 of the head of the screw start to engage in the thread of the annular bushing, at the same time as the slotted bushing expands and locks the bushing against the spherical surface of the hole 7 on the under side of the attachment 6, presses outwardly towards the edges of the sphere 7 and locks the annular bushing rotationally during rotation of the conical shape 3 of the locking- and retaining-sleeve 2 against the spiral threaded cone on the inside of the sphere, the flanges of which 12 are locked against the inside of the spherical hole 7 during rotation of the knurled ring 4.

During the screwing-in of the locking- and retaining-sleeve 2, its slotted sides are pressed against the surrounded rod, the handle 1.

When the two elements are to be joined together with a device according to the invention in order to fasten the first element, in the shape of a rod 1, with the second element 2, in the shape of a rod-receiving locking- and retaining-sleeve, by means of a conical threaded part 3 of the locking- and retaining-sleeve, the conical threaded part 3 is pushed in through the spherical hole 7 in which the flanges 11 of the annular bushing 5 are placed. The conical shaped, threaded part 3, the screw, is pushed in so far that it touches the annular bushing 5. The desired direction of the conical shaped part with the fitted pole therein, 3 is selected, and then the rotation of the knurled ring is continued. The final rotation occurs when the thread of the conical, threaded part 3 totally fills up the conical thread in the annular bushing 5 and thereby presses the annular bushing 5 and its flanges 12 in the spherical hole 7 and finally the annular part 11 of the bushing 5 is pressed out of the lower opening of the hole 7.

During the screwing-in of the locking- and retaining-sleeve its slotted sides are pressed against the surrounded rod, the handle, in the cone and lock it. Simultaneously, the conical shape of the annular bushing is pressed against the spiral threaded cone of the inside of the sphere, the flanges of which then presses the flanges of the sphere against the spherical interior of the hole in the stand attachment.

The object of the invention is to simplify the locking mechanism of a rod shaped element to an attachment, where locking in all planes is executed with a single action. As long as the locking moment has not been triggered, the rod and its end attachment can move in the longitudinal direction at the same time as it may rotate completely freely. During rotation of the locking- and retaining-sleeve its flanges will close in the hole of the bushing and grip the rod and lock it. The rotational movement of the sleeve in the conical threaded cavity of the sphere squeezes apart the flanges of the sphere which press against the spherical shape of the interior of the hole on the attachment that is mounted on a stand or the like. In this way locking of the position of the sphere, the rotation of which is prevented by the pin 8 mounted on the inside of the spherical hole, may be accomplished. Since the attachment is provided with a 45 degree angle and this can be given different adjustments the rod may take any desired angle out of the totality of 360 degrees.

The present invention may of course be modified within the frame of the enclosed claims without changing the scope of the protection.

## Claims

1. Device for with a single action fastening and fixing a rod shaped element (1) to an element (6), so that they may take up an arbitrarily selected angle with each other in arbitrarily selected plane of their respective rotational positions, **characterized in that** the device comprises a screw joint in the form of the rod shaped element- receiving locking-and retaining-sleeve (2) which is provided with a locking ring (4) in one end and in the other end provided with a conical, slotted part (3) with an external thread (10) which is complementary with an internal thread (13) in a spherical slotted annular bushing (5) which is placed in a spherical cavity (7) in one end of the element (6) and where element (6) at the other end has a means for attachment on a tripod or the like, where the rod shaped element (1) is freely displaceable in the locking- and retaining-sleeve (2) as long as the locking- and retaining-sleeve (2) and its conical, slotted part (3) is not screwed down into the conical thread of the spherical annular bushing (5) in the spherical cavity (7).

2. Device according to claim 1, **characterized in that** the slotted annular bushing (5) comprises flanges (12) that are connected by a thin annular elastic part (11).

3. Device according to claim 2, **characterized in that** the locking- and retaining-sleeve (2) locking ring (4) is for tightening of the locking- and retaining-sleeve's (2) lower part's (3) conical thread (10) where during tightening of the ring (4), the conical thread (10) expands the spherical bushing (5) with its flanges (12) in the cavity (7) until it is fully anchored in the spherical cavity (7).

4. Device according to any of claims 1 to 4, **characterized in that** external thread (10) is a spiral thread.

5. Method to fasten and fix a rod shaped element (1) to a second element (6) with a device according to any of claims 1-4, **characterized in that** the rod shaped element is introduced into the locking- and retaining-sleeve (2) with its locking ring (4) and the conical, slotted part (3) with the external thread (10) with a shallow pitch, is introduced toward the internal thread (13) in the spherical slotted annular bushing (5) in the spherical cavity (7) and where the rod shaped element (1) may be freely displaced in the locking- and retaining-sleeve (2) as long as the locking- and retaining-sleeve (2) and its conical, slotted part (3) is not screwed down into the conical thread of the spherical annular bushing (5) in the spherical cavity (7) after which the conical threaded part (3) of the locking- and retaining-sleeve (2), is introduced down into the spherical cavity (7) with the spherical bushing (5), and where the desired direction and the angle for the conical, slotted threaded part (3) is decided, following which its threads (10) meet the conical threads (13) of the annular bushing (5) and start to engage in the annular bushing (5), following which the final tightening of the threaded part (3) is performed in order to tightly lock the rod shaped element and second element to each other.

## Patentansprüche

1. Vorrichtung, um, mit einer einzelnen Aktion, ein Anbringen und Festlegen eines stangenförmigen Elementes (1) an einem Element (6) durchzuführen, so dass diese einen willkürlich gewählten Winkel zueinander in einer willkürlich gewählten Ebene ihrer jeweiligen Rotationspositionen einnehmen können, **dadurch gekennzeichnet, dass** die Vorrichtung aufweist: ein Schraubverbindungsstück in Form einer zum Aufnehmen des stangenförmigen Elementes dienenden Verriegelungs- und Rückhaltemuffe (2), die an dem einen Ende mit einem Verriegelungsring (4) versehen ist und an dem anderen Ende mit einem konischen geschlitzten Teil (3) mit Außengewinde (10) versehen ist, das komplementär zu einem Innengewinde (13) in einer geschlitzten sphärischen ringförmigen Hülse (5) ist, die in einem sphärischen Hohlraum (7) in dem einen Ende des Elementes (6) angeordnet ist, und wobei das Element (6) an dem anderen Ende eine Einrichtung für ein Befestigen an einem Dreifuß (Stativ) oder dergleichen aufweist, wobei das stangenförmige Element (1) in der Verriegelungs- und Rückhaltemuffe (2) frei verschoben werden kann, solange die Verriegelungs- und Rückhaltemuffe (2) und ihr geschlitzter konischer Teil (3) nicht fest in das konische Gewinde der sphärischen ringförmigen Hülse (5) im sphärischen Hohlraum (7) eingeschraubt ist.

2. Vorrichtung nach Anspruch 1, **dadurch gekennzeichnet**, das die geschlitzte ringförmige Hülse (5) Backen (12) aufweist, die durch einen dünnen ringförmigen elastischen Teil (11) verbunden sind.

3. Vorrichtung nach Anspruch 2, **dadurch gekennzeichnet, dass** der Verriegelungsring (4) der Verriegelungs- und Rückhaltemuffe (2) zum Festschrauben des am unteren Ende (3) der Verriegelungs- und Rückhaltemuffe (2) befindlichen konischen Gewindes (10) dient, wobei während des Festschraubens des Rings (4) das konische Gewinde (10) die sphärische Hülse (5) mit ihren Backen (12) in den Hohlraum (7) aufweitet, bis diese im sphärischen Hohlraum (7) vollständig verankert ist.

4. Vorrichtung nach einem der Ansprüche 1 bis 4, **dadurch gekennzeichnet, dass** das Außengewinde (10) ein spiralförmiges Gewinde ist.

5. Verfahren zum Anbringen und Festlegen eines stangenförmigen Elements (1) an einem zweiten Element (6) mit einer Vorrichtung nach einem der Ansprüche 1 bis 4, **dadurch gekennzeichnet, dass** das stangenförmige Element eingeführt wird in die Verriegelungs- und Rückhaltehülse (2), mit ihrem Verriegelungsring (4) und dem konischen geschlitzten Teil (3) mit dem eine flache Steigung aufweisenden Außengewinde (10), eingeführt wird in Richtung in das Innengewinde (13) in der sphärischen geschlitzten ringförmigen Hülse (5) im sphärischen Hohlraum (7), wobei das stangenförmige Element (1) in der Verriegelungs- und Rückhaltehülse (2) frei verschoben werden kann, solange die Verriegelungs- und Rückhaltehülse (2) und ihr konischer geschlitzter Teil (3) in das konische Gewinde der sphärischen ringförmigen Hülse (5) in dem sphärischen Hohlraum (7) nicht fest eingeschraubt ist, und danach wird der mit einem konischen Gewinde versehene Teil (3) der Verriegelungs- und Rückhaltehülse (2) hinein in den sphärischen Hohlraum (7) mit der sphärischen Hülse (5) eingebracht, wobei die gewünschte Richtung und der gewünschte Winkel für den konischen geschlitzten, mit Gewinde versehenen Teil (3) entschieden wird, worauf folgend sein Gewinde (10) auf die konischen Gewinden (13) der ringförmigen Hülse (5) auftrifft und beginnt, in die ringförmige Hülse (5) einzugreifen, worauf folgend das endgültige feste Einschrauben des mit Gewinde versehenen Teils (3) durchgeführt wird, um das stangenförmige Element und das zweite Element miteinander fest zu verriegeln.

## Revendications

1. Dispositif pour, en une seule action, attacher et fixer un élément en forme de tige (1) sur un élément (6), de manière à ce qu'ils puissent prendre un angle choisi arbitrairement l'un par rapport à l'autre dans un plan de leurs positions de rotation respectives choisi arbitrairement, **caractérisé en ce que** le dispositif comprend un raccord à vis sous la forme du manchon recevant, bloquant et retenant l'élément en forme de tige (2) qui est pourvu d'une bague de verrouillage (4) dans une extrémité et pourvu dans l'autre extrémité d'une partie conique fendue (3) avec un filetage externe (10) qui est complémentaire à un filetage interne (13) dans une douille annulaire sphérique fendue (5) qui est placée dans une cavité sphérique (7) dans une extrémité de l'élément (6) et où l'élément (6) à l'autre extrémité possède des moyens d'attachement sur un trépied ou analogue, où l'élément en forme de tige (1) peut se déplacer librement dans le manchon de blocage et de retenue (2) tant que le manchon de blocage et de retenue (2) et sa partie conique fendue (3) n'est pas vissé dans le filetage conique de la douille annulaire sphérique (5) dans la cavité sphérique (7).

2. Dispositif selon la revendication 1, **caractérisé en ce que** la douille annulaire fendue (5) comprend des brides (12) qui sont raccordées par une mince partie annulaire élastique (11).

3. Dispositif selon la revendication 2, **caractérisé en ce que** la bague de verrouillage (4) du manchon de blocage et de retenue (2) est destinée à serrer le filetage conique (10) de la partie inférieure (3) du manchon de blocage et de retenue (2) où, durant le serrage de la bague (4), le filetage conique (10) élargit la douille sphérique (5) avec ses brides (12) dans la cavité (7) jusqu'à ce qu'elle soit pleinement ancrée dans la cavité sphérique (7).

4. Dispositif selon l'une quelconque des revendications 1 à 4, **caractérisé en ce que** le filetage externe (10) est un filetage en spirale.

5. Procédé pour attacher et fixer un élément en forme de tige (1) à un second élément (6) avec un dispositif selon l'une quelconque des revendications 1-4, **caractérisé en ce que** l'élément en forme de tige est introduit dans le manchon de blocage et de retenue (2) avec sa bague de verrouillage (4) et la partie conique fendue (3) avec le filetage externe (10) en faible pente, est introduite vers le filetage interne (13) dans la douille annulaire sphérique fendue (5) dans la cavité sphérique (7) et où l'élément en forme de tige (1) peut être déplacé librement dans le manchon de blocage et de retenue (2) tant que le manchon de blocage et de retenue (2) et sa partie conique fendue (3) n'est pas vissé dans le filetage conique de la douille annulaire sphérique (5) dans la cavité sphérique (7) après quoi la partie filetée conique (3) du manchon de blocage et de retenue (2) est introduite dans la cavité sphérique (7) avec la douille sphérique (5), et où la direction et l'angle souhaités pour la partie filetée conique fendue (3) sont décidés, après quoi son filetage (10) rencontre le filetage conique (13) de la douille annulaire (5) et commence à s'engager dans la douille annulaire (5), après quoi le serrage final de la partie filetée (3) est réalisé afin de bloquer fermement l'élément en forme de tige et le second élément l'un sur l'autre.
